(19) **Europäisches Patentamt**

**European Patent Office**

**Office européen des brevets**

(11) **EP 0 764 679 B1**

(12) **EUROPÄISCHE PATENTSCHRIFT**

(45) Veröffentlichungstag und Bekanntmachung des Hinweises auf die Patenterteilung:
**17.03.2004  Patentblatt 2004/12**

(51) Int Cl.$^7$: **C08J 5/18**, B32B 27/32, C08L 23/04
// C08L23:04

(21) Anmeldenummer: **96114581.0**

(22) Anmeldetag: **12.09.1996**

(54) **Siegelbare Kaschierfolie enthaltend mit Metallocen-Katalysatoren hergestellte Copolymere**

Heat sealable film containing copolymers obtained with metallocene catalysts

Feuille thermosoudable contenant des copolymères préparés avec des catalyseurs à base de métallocènes

(84) Benannte Vertragsstaaten:
**AT BE CH DE DK ES FI FR GB IT LI NL**

(30) Priorität: **25.09.1995  DE 19535503**

(43) Veröffentlichungstag der Anmeldung:
**26.03.1997  Patentblatt 1997/13**

(73) Patentinhaber: **Wipak Walsrode GmbH & Co. KG**
**29656 Walsrode (DE)**

(72) Erfinder:
• **Kaschel, Gregor, Dr.**
**29664 Walsrode (DE)**
• **Tamke, Heiko**
**29699 Bomblitz (DE)**

(74) Vertreter: **Kutzenberger, Helga, Dr. et al**
**Kutzenberger & Wolff,**
**Theodor-Heuss-Ring 23**
**50668 Köln (DE)**

(56) Entgegenhaltungen:
**EP-A- 0 707 957        EP-A- 0 716 917**
**WO-A-93/03093        WO-A-95/13321**

• **DATABASE WPI Section Ch, Week 9618 Derwent Publications Ltd., London, GB; Class A17, AN 96-175763 XP002020857 & JP-A-08 053 554 (SUMITOMO CHEM CO LTD) , 27.Februar 1996**

**Beschreibung**

Zahlreiche Produkte sind in Folien abgepackt. Die Verarbeitung auf den Verpackungsmaschinen erfordert häufig Folien, die siegelbar sind. Der Siegelschicht wird eine große Bedeutung beigemessen, da sie maßgeblich die Verarbeitungsbedingungen auf den Verpackungsmaschinen bestimmt. Hier kommt insbesondere der Festigkeit, dem Siegelbeginn und der Hot-Tack-Eigenschaften der Siegelschicht besondere Bedeutung zu. Normalerweise lassen sich nicht alle an eine Verpackung gestellten Anforderungen durch ein Polymer erfüllen. Daher werden Polymere unterschiedlicher Sorten kombiniert. Wünschenswert ist die Verwendung ähnlicher Polymere, um die stoffliche Wiederverwertung der Folie zu verbessern.

Viele Folien enthalten Siegelschichten auf Basis von Polyethylen oder deren Copolymeren. Die Versiegelung erfolgt in der Regel durch ein oder zwei beheizte Siegelbacken, die die zu versiegelnden Flächen über eine definierte Zeit zusammendrücken. Der Vorteil einer polyethylenischen Siegelschicht liegt unter anderem in der im Vergleich zu anderen Polymeren niedrigen Siegeltemperatur.

Die Beschreibung und Analyse der Vorgänge bei der Versiegelung werden von MEKA/STEHLING (Heat Sealing of Semicrystalline Polymer Films I; J. Appl. Polymer Sci., Vol. 51 (1994) S. 89-103) beschrieben. Die Siegelkurve wird von ihnen unter anderem beschrieben durch die Siegelanspringtemperatur $T_{si}$ der Temperatur zu Anfang des Siegelplateaus $T_{pi}$ und der Siegelfestigkeit im Bereich des Siegelplateaus $SS_p$. In einem weiteren Artikel diskutieren STEHLING/MEKA (Heat Sealing of Semicrystalline Polymer Films II; J. Appl. Polymer Sci., Vol. 51 (1994) S. 105-119) unterschiedliche Polymere als Siegelschichten. Insbesondere gehen sie auf die physikalischen Eigenschaften der Polymere und deren Auswirkung auf das Siegelverhalten ein. So stellen STEHLING/MEKA fest, daß die Streckgrenze (Yield-Point) der erhaltenen Folienmuster mit der Siegelfestigkeit korreliert. Es ist daher zu erwarten, daß Siegelschichten mit hohen Streckgrenzen hohe Siegelfestigkeiten und Siegelschichten mit niedrigen Streckgrenzen niedrige Siegelfestigkeiten ergeben.

Weiterhin stellen STEHLING/MEKA fest, daß bei Polyethylenen durch die Zugabe von Comonomeren die Siegelanspringtemperatur abgesenkt werden kann. Durch die Einführung eines Comonomers wird allerdings die Streckgrenze und somit auch die Siegelfestigkeit SSp erniedrigt.

Die konventionellen Ethylen-Copolymerisate mit α-Olefinen zeigen nach GNAUCK/FRÜNDT (Einstieg in die Kunststoffchemie, Carl Hanser Verlag München, 3. Aufl. 1991, S. 59f) kaum Langkettenverzweigungen, sie zählen daher zu den linearen Polymeren. Die mechanischen und thermischen Eigenschaften ändern sich annähernd linear zur Dichte bzw. Kristallinität. Eigenschaften und Verwendung dieser Olefin-Copolymerisate entsprechen weitgehend denen der Ethylen-Homopolymerisate.

In jüngster Zeit sind Polyethylen und Copolymere, die aus Ethylen und α-Olefinen bestehen, in Gegenwart von hochstereoregulativen Katalysatoren polymerisiert worden. Solche Katalysatoren sind beispielsweise in der Gruppe der Metallocene zu finden. Metallocen-Katalysatoren sind ein Katalysatorsystem, das aus einem löslichen Metallkomplex mit definierter Struktur, der auf einem Trägermaterial fixiert ist, und dem Aktivator (Alumoxan) besteht. Eine grundlegende Definition dieser Stoffklasse findet sich bei BEYER/WALTER (Lehrbuch der organischen Chemie; Hirzel Verlag Stuttgart 1991, 22. Aufl., S. 650ff). Einen Überblick über den Einsatz der Metallocen-Katalysatoren bei der Polymerisation von Polyolefinen gibt MÜHLHAUPT (Nachr. Chem. Tech. Lab 41 (1993) Nr.12, S. 1341-1351). Unter anderem wird am Beispiel von Polypropylen die Wirkung unterschiedlicher Metallocen-Katalysatoren auf den Polymerisationsprozeß geschildert. Die mit konventionellen Ziegler-Natta-Katalysatoren hergestellten Polymere enthalten häufig in den niedermolekularen Fraktionen höhere Konzentrationen der α-Olefine. In einer weiteren Veröffentlichung wird von HUNGENBERG ET AL. (Die angewandte Makromolekulare Chemie 227 (1995), Nr. 3981, S.159-177) auf die Synthese von Olefinoligomeren und -polymeren, deren Molekulargewichte und Schmelzpunkte eingegangen.

In WO 94/14855 wird eine Folie bestehend aus linerem Polyethylen niedriger Dichte beschrieben. Die Folie besteht aus einem Copolymerisat enthaltend Ethylen und ein α-Olefin mit 3 bis 10 Kohlenstoffatomen. Die Dichte variiert von 0,9 bis 0,929 g/cm³; der Schmelzflußindex von 15 bis 25 g/10min gemessen bei 190°C gemäß ASTM D-1238, Condition F; die Molekulargewichtsverteilung $M_w/M_n$ von 2,5 bis 3,0 und der Kristallitschmelzpunkt von 95° bis 135°C. Die Trübung des Films liegt zwischen 3 bis 20 gemäß ASTM D-1003. Die Siegeleigenschaften des

Films werden nicht erwähnt. Der verwendete Katalysator enthält ein Trägermaterial, Aluminiumoxan und mindestens ein Metallocen.

EP 0572034 beschreibt ein ethylenisches Copolymer und ethylenische Copolymerzusammensetzung. Der Schmelzindex MFR liegt zwischen 0.1 bis 30 g/10min, die Dichte zwischen 0,88 bis 0,94 g/cm³. Der für die Herstellung der Polymere verwendete Katalysator enthält Metallocene. Erwähnt werden die Siegeltemperaturen der Flachfolienmuster. Unerwähnt bleiben Siegelnahtfestigkeiten und Hot-Tack Messungen.

In WO 94/26816 wird ein Copolymer bestehend aus Ethylen und einem $C_4$ bis $C_{12}$ Comonomer mit enger Molekulargewichtsverteilung beschrieben, sowie dessen Herstellung und Gebrauch, insbesondere als Stretch-Folie. Der für die Herstellung der Polymere verwendete Katalysator enthält Metallocene. Unerwähnt bleiben Siegeleigenschaften und Hot-Tack Messungen.

EP 0598626 beschreibt ein Ethylen/ $\alpha$-Olefin-Copolymerisat. Der für die Herstel- lung der Polymere verwendete Katalysator enthält mindestens zwei spezifische Metallocene. Die Polymerzusammensetzung zeichnet sich durch ihre gute Thermoformbarkeit, hohe Transparenz und Haftung zu polaren Materialien aus. Unerwähnt bleiben Siegeleigenschaften und Hot-Tack Messungen.

Ausgewählte Ethylencopolymere und Ionomere werden von J.R DE GARAVILLE (TAPPI Proceedings: 1993 Polymers, Lamination & Coating Conference, S. 525-538) verglichen mit einem Ethylen/Vinylacetat-Copolymer und einigen linearen Polyethylenen unterschiedlicher Dichte. Ebenfalls in der Prüfung ist ein mit Metallocen-Katalysatoren produziertes Copolymer bestehend aus Ethylen und $\alpha$-Olefin mit 4 Kohlenstoffatomen. Die Ergebnisse der Studie von DE GARAVILLE belegen, daß Ionomere und säuremodifizierten Ethylencopolymere für die flexible Verpackung in den Aspekten Siegeleigenschaften und Hot-Tack-Performance die bestgeeignesten Polymere sind. Das mit Metallocen-Katalysatoren produzierte Ethylencopolymer unterscheidet sich von den konventionellen linearen Polyethylenen durch einen breiteren Siegelbereich, gekoppelt mit niedrigeren Siegelfestigkeiten.

Wünschenswert ist allerdings eine siegelbare Folie auf Basis von Polyethylen, die mit Polyethylen verträglich ist. Dies ist bei Ionomeren nicht in allen Fällen gegeben. Es stellt sich daher die Aufgabe, eine siegelbare Folie bereitzustellen, die folgenden Anforderungen entspricht:

1. Folie bestehend aus Polyethylen oder deren Copolymeren:

   Gewünscht wird eine polyolefinische Folie, da Polyolefine weit verbreitete Standardkunststoffe sind. Die verwendeten Copolymere sollen ebenfalls zum überwiegenden Teil aus Olefinen bestehen und mit Polyethylen verträglich sein. Somit wird dem Gedanken der stofflichen Vereinheitlichung entsprochen.

2. niedrige Siegeltemperatur:

   In der Regel werden niedrige Siegeltemperaturen zur schonenden Behandlung der Packstoffe und Füllgüter gewünscht. Die Beurteilung entsprechend dieses Anforderungsprofiles kann durch die Siegelanspringtemperatur $T_{si}$ erfolgen.

3. hohe Siegelfestigkeit:

   Die Siegelschicht soll nicht nur bei niedrigen Temperaturen siegeln, sie soll auch hohe Siegelfestigkeiten aufweisen. Ein Maß für die Siegelfestigkeit ist die Höhe des Siegelplateaus $SS_p$, je höher das Plateau, umso höher kann die Siegelnaht mechanisch belastet werden.

4. hohe Siegelfestigkeit unmittelbar nach der Versiegelung:

   Bei einer Vielzahl von Verpackungslösungen wird eine hohe Siegelfestigkeit bei der noch warmen Siegelnaht gefordert. Die Prüfung des Hot-Tack ist ein geeignetes Beurteilungskriterium.

5. optische Anforderung:

   Die Verpackung darf die Präsentation des Inhaltes nicht nachteilig beeinflussen. In der Regel wird eine transparente Folie gefordert. Der Inhalt muß durch die Folie möglichst naturgetreu zu sehen sein. Hierzu ist ein geeignetes Beurteilungskriterium die Absorption des sichtbaren Lichtes (Trübung).

In EP 0716917 werden Laminate beschrieben, die MPE umfassen deren äußerste immer einen höheren Schmelzpunkt als die angrenzende Klebstoffschicht aufweisen.

Dies gilt auch für die Folien, die in EP 0707957 offenbart werden.

Aus der Offenbarung von JP 8053554 sind keine mehrschichtigen Filme zu entnehmen.

Sofern in WO 95/13321 mehrschichtige Folien beschrieben sind, ist kein Hinweis daraus zu entnehmen, mit welchem speziellen Aufbau der Folien das vorstehende Eigenschaftsprofil befriedigend erfüllt werden kann.

Im Rahmen der Erfindung gelten folgende Definitionen:

Alle genannten Polymere sind kommerziell erhältliche Handelsprodukte. Bei Mischungen werden, wenn nicht anders angegeben, die Konzentrationen der einzelnen Polymere in Gew.-% ausgedrückt. Die angegeben Dichten sind entsprechend ISO 1183 bei 23°C bestimmt. Der Schmelzflußindex MFR wird entsprechend ISO1133 bei einer Temperatur von 190°C und einem Auflagegewicht von 2,16 kg gemessen, wenn nicht anders vermerkt. Die Polymere werden entsprechend der vereinbarten Konvention abgekürzt. Unterschiedliche Polymere gleicher Klasse werden durch einen Bindestrich und eine Zahl ausgewiesen (Beispiel: LLDPE-2).

Als "Siegelschicht" wird die außenliegende Schicht der Folie mit dem niedrigsten Schmelzpunkt bezeichnet. Enthalten die Außenschichten Polymermischungen, so wird als Siegelschicht die Folienaußenseite bezeichnet, die die niedrigst schmelzende Komponente enthält. Bei der Angabe von Folienaufbauten wird die Siegel-schicht rechts geschrieben, wenn nicht anders angegeben.

Als "LDPE" wird Polyethylen niedriger Dichte bezeichnet, das im Dichtebereich von 0,86 bis 0,93 g/cm$^3$ liegt. Die LDPE-Moleküle zeichnen sich durch einen hohen Verzweigungsgrad aus.

Als "LLDPE" werden die linearen Polyethylene niedriger Dichte bezeichnet, die neben Ethylen als Comono-mere ein oder mehrere $\alpha$-Olefine mit mehr als 3 C-Atomen enthalten. Als $\alpha$-Olefine seien hier stellvertretend genannt Buten-1, Hexen-1, 4-Methylpenten-1 und Octen-1. Aus der Polymerisation der genannten Stoffe ergibt sich die für LLDPE typische molekulare Struktur, die durch eine lineare Hauptkette mit daranhängenden Seitenketten gekennzeichnet ist. Die Dichte variiert zwischen 0,86 bis 0,935 g/cm$^3$. Der Schmelzflußindex MFR liegt üblicherweise zwischen 0,3 bis 8 g/10min. In einigen Veröffentlichungen werden die linearen Ethylen/ $\alpha$-Olefin-Copolymerisate entsprechend ihrer Dichte unterteilt in VLDPE oder ULDPE. Da aber nach GNAUCK/FRÜNDT (Einstieg in die Kunststoffchemie, Hanser Verlag 1991, S. 58) Eigenschaften, Verarbeitung und Verwendung dieser Copolymerisate weitgehend den Ethylen-Homopolymerisaten entspricht, wird hier auf eine genauere Unterscheidung verzichtet.

Mit "MPE" wird hier ein Ethylen-Copolymerisat bezeichnet, das mittels Metallocen-Katalysatoren polymerisiert wurde. Als Comonomer wird vorzugsweise ein $\alpha$-Olefin mit vier oder mehr Kohlenstoffatomen eingesetzt. Die mit konventionellen Ziegler-Natta-Katalysatoren hergestellten Polymere enthalten häufig in den niedermolekularen Fraktionen höhere Konzentrationen der $\alpha$-Olefine. Als Folge der sehr einheitlichen katalytisch wirksamen Metallocen-Zentren findet man enge Molkulargewichtsverteilungen und bei Fraktionierungen sehr einheitlichen Einbau der $\alpha$-Olefine so-wohl in den hochals auch in den niedermolekularen Fraktionen. Die Dichte liegt vorzugsweise unter 0,92 g/cm$^3$. Die Molekutargewichtsverteilung $M_w/M_n$ ist kleiner 3, vorzugsweise kleiner 2,5.

Mit "EAA" werden Copolymerisate bestehend aus Ethylen und Acrylsäure und mit "EMAA" Copolymerisate bestehend aus Ethylen und Methacrylsäure bezeichnet. Der Ethylengehalt liegt vorzugsweise zwischen 60 und 99 Mol-%.

Mit "EVA" wird ein Copolymerisat bestehend aus Ethylen und Vinylacetat bezeichnet. Der Ethylengehalt liegt vorzugsweise zwischen 60 und 99 Mol-%.

Als "Zwischenschicht", "Verbindungsschicht" oder "mittlere Schicht" wird die Schicht oder die Schichten aufgefaßt, die zwischen den Folienaußenseiten liegt oder liegen. Die Schichten einer Folie werden durch einen "/"-Strich getrennt. Polymermischungen werden durch ein "+" gekennzeichnet, wobei die beteiligten Polymere durch runde Klammern zusammengefaßt sind. Die mengenmäßig überwiegende Komponente ist zuerst genannt.

Es folgt ein Beispiel für die vereinbarte Schreibweise von Folienaufbauten. Der dreischichtige Aufbau LDPE/ LLDPE/(MPE+LLDPE) hat als Außenschichten LDPE und die Mischung (MPE+LLDPE) und als Zwischenschicht LLDPE. Die Siegelschicht ist die Mischung (MPE+LLDPE), wobei die Komponente MPE gegenüber der Komponente LLDPE überwiegt.

Erfindungsgemäß gelang die Bewältigung der gestellten Aufgabe durch eine siegelbare mehrschichtige Folie gemäß Anspruch 1.

Das in der Siegelschicht enthaltene lineare Ethytencopolymerisat niedriger Dichte MPE besteht aus Ethylen und einem oder mehreren $\alpha$-Olefinen mit mehr als 3 CAtomen. Als Beispiele für die $\alpha$-Olefine seien hier genannt Buten-1, Hexen-1, 4-Methylpenten-1 und Octen-1.

Die erfindungsgemäße Folie ist aus mehreren Schichten aufgebaut sein. Sie ist immer dadurch gekennzeichnet, daß das Copolymerisat MPE in der Siegelseite enthalten ist. Das Copolymerisat MPE kann mit anderen auf Ethylen basierenden Polymerisaten wie z. B. LDPE oder LLDPE gemischt werden. Mit "S" wird die erfindungsgemäße Siegel-schicht enthaltend MPE oder eine Mischung aus MPE mit LDPE oder LLDPE gekennzeichnet, wobei der MPE-Anteil überwiegt.

Tabelle 1:

| Auswahl möglicher zwei- oder dreischichtiger Folienaufbauten der erfindungsgemäßen Folie | | | |
|---|---|---|---|
| Nr. | Folienaufbau | | |
| | Schicht i=3 | Schicht i=2 | Schicht i=1 |
| 1 | - | LDPE | S |
| 2 | - | LLDPE | S |
| 3 | LLDPE | LDPE | S |

Tabelle 1:   (fortgesetzt)

| Auswahl möglicher zwei- oder dreischichtiger Folienaufbauten der erfindungsgemäßen Folie | | | |
|---|---|---|---|
| Nr. | Folienaufbau | | |
| | Schicht i=3 | Schicht i=2 | Schicht i=1 |
| 4 | LLDPE-2 | LLDFE-1 | S |
| 5 | - | (LDPE+LLDPE) | S |
| 6 | - | (MPE+LLDPE) | S |
| 7 | - | (MPE+LDPE) | S |
| 8 | LDPE | (LLDPE+LDPE) | S |
| 9 | LLDPE | (MPE+LLDPE) | S |
| 10 | LDPE-2 | (MPE+LDPE-1) | S |

Die mit i=1 bezeichnete Schicht ist die Siegelschicht. Die aufgeführten Folienaufbauten geben keinen vollständigen Überblick zu allen möglichen Variationen.

Insbesondere bei der Wahl der Polymere wird darauf geachtet, daß die Beziehung

$$F_{pi=1} < F_{pi=2} < ... < F_{pi} < ... < F_{pi=n} \quad \text{(Schichten i=1 ... n)} \qquad \text{(Gleichung 1)}$$

genügt, wobei $F_{pi}$ der Kristallitschmelzpunkt des Polymers aus der Schicht i ist. Die Siegelschicht (i=1) besitzt dabei den niedrigsten Kristallitschmelzpunkt $F_{pi=1}$. Sind in einer Schicht mehrere Polymere enthalten, so wird der Kristallitschmelzpunkt $F_p$ der Komponente angegeben, die die größte Schmelzenthalpie erfordert.

Die Foliendicke liegt vorzugsweise im Bereich von 10 µm bis 150 µm.

Zur Verbesserung der Konfektionierung können einer oder beiden Deckschichten der Folie übliche Additive zugesetzt werden. Dies sind zum Beispiel organische oder anorganische Antiblockmittel oder aber ein Gleitmittel oder aber Antistatika. Bekannte Antiblockmittel sind beispielsweise organische, unverträgliche Polymerisate wie Polyester, Polycarbonat und dergleichen oder organische Substanzen wie Siliziumdioxid (z.B. natürliche oder künstliche Kieselsäure) oder Silicate. Gleitmittel sind beispielsweise Fettalkohole, Fettsäurediamide (z.B. Öl- oder Erucasäureamid) oder andere Stoffe, wie sie bei PIRINGER angegeben werden (PIRINGER: Verpackungen für Lebensmittel, VCH Verlagsgesellschaft 1993, siehe S. 53). Bekannte Antistatika sind nach DOMININGHAUS (S.23) bei den sogenannten inneren Antistatika ethoxylierte tertiäre Amine von Fettsäuren oder ethoxylierte Glykolester von Fettsäuren oder aber bei den äußeren Antistatika quaternäre Ammoniumsalze von Fettsäuren.

Gerade die Gleitfähigkeit ist von besonderer Bedeutung für diese Kaschierfolien. MPE mit einem Kristallitschmelzpunkt von weniger als 110°C besitzt in der Regel einen sehr hohen Reibungskoeffizienten, der nur durch Zugabe von Additiven wie zum Beispiel Antiblockmitteln und Gleitmitteln reduziert werden kann.

Die erfindungsgemäße Folie ist transparent. Sie kann durch die Zugabe von Farbmitteln eingefärbt werden. In DOMININGHAUS (S. 26ff) wird ein Überblick zum Thema Farbmittel gegeben. Üblicherweise werden die Farbmittel über die Zugabe von Masterbatchen der Folie zudosiert.

Die Mischung verschiedener Polymere oder Polymeren mit Masterbatchen, die Additive in erhöhter Konzentration entbalten, erfolgt zweckmäßigerweise durch die intensive Vermengung des Granulats vor der Zugabe in den Extruder. Im Extruder werden dann die Stoffe intensiv gemischt bzw. die Additive dispergiert.

Die der Siegelseite abgewandte Folienaußenseite kann einer physikalischen Oberflächenbehandlung unterzogen werden. Man unterscheidet hier die elektrischen (Corona-Vorbehandlung) und thermische Verfahren (siehe hierzu G. HABENICHT: Kleben, Springer-Verlag Berlin, 1986, S. 341ff). Dadurch wird die Folienaußenseite derart modifiziert, daß der für die Kaschierzwecke benötigte Klebstoff besser auf der Folienaußenseite haftet.

Die erfindungsgemäße Folie kann ebenfalls bei niedrigen Temperaturen mit einer Folie versiegelt werden, die eine auf Ethylen basierende Siegelschicht enthält. Als Beispiel seien hier die Polymere LDPE, LLDPE und EVA oder Mischungen aus diesen Polymeren genannt. Die erfindungsgemäße Folie ist je nach verwendetem Substrat tiefziehbar.

Die erfindungsgemäße Folie kann verschiedenste Substrate enthalten. Als Substrate können zum Beispiel eingesetzt werden Papier, Aluminiumfolie, Zellglas, biaxialorientiertes Polypropylen (BOPP), biaxialorientiertes Polyalkylenterephthalat, ge- recktes und ungerecktes Polyamid, Polycarbonat, Polyvinylalkohol, Polystyrol oder orientiertes Polystyrol, metallisierte Filme sowie Kombinationen aus den genannten Substraten. Alle aufgeführten Substrate können ein- oder mehrschichtig aufgebaut sein. Die Substrate können eingefärbt, lackiert oder bedruckt sowie in beliebiger Kombination eingefärbt, lackiert und bedruckt sein.

Überraschenderweise ist es mit der erfindungsgemäße Folie möglich, sehr transparente Folien mit ausgezeichneten Siegeleigenschaften herzustellen. Die genannten Anforderungen werden durch die erfindungsgemäße Folie in besonderer Weise erfüllt.

Es war nicht zu erwarten, daß die erfindungsgemäße Folie bereits bei niedrigen Temperaturen siegelt und dabei sehr hohe Hot-Tack-Festigkeiten erreicht. Weiterhin war nicht zu erwarten, daß trotz der geringen Streckgrenze der Siegelschicht sehr hohe Siegelfestigkeiten erreicht werden.

Ein weiterer Gegenstand der Erfindung ist daher die Verwendung der ertindungsgemäßen Folie als Siegelschicht in Kombination mit verschiedensten Substraten für die Verpackung trockener Produkte (z.B. Snack-Artikel, Teigwaren etc.) oder feuchter Produkte (z.B. Fleisch, Käse, Fertiggerichte etc.) oder tiefgefrorener Produkte (z. B. Fertiggerichte) oder pharmazeutischer Produkte.

## Herstellverfahren

Die Herstellung der erfindungsgemäßen Folie kann auf allen ein- oder mehrschichtigen Blas-, Flachfolien-, Beschichtungs- oder Extrusionskaschieranlagen erfolgen. Weiterhin ist es möglich, ein oder mehrere der genannten Fertigungsverfahren zu kombinieren. Die Folie kann zum Beispiel auf einer Tiefdruck- oder Flexodruck-Maschine bedruckt werden.

## Prüfmethoden

Die Bestimmung der Streckgrenze erfolgt analog DIN 53455 aus dem Zugversuch an einem 15 mm breiten Folienstreifen. Die Streckgrenze ist die Zugspannung, bei der die Steigung der Kraft-Längenänderungskurve zum erstenmal gleich Null wird. Angegeben ist der Mittelwert aus den Messungen längs und quer zur Laufrichtung der Folie.

Die Siegelfestigkeit dient der Bestimmung der Festigkeit von Siegelnähten. Unter der Siegelfestigkeit (SF) wird die Höchstkraft angegeben in N verstanden, die erforderlich ist, um eine unter definierten Bedingungen (Druck, Zeit, Temperatur) hergestellte Siegelnaht zu trennen. Aus der Bahnmitte werden zwei fehlerfreie, saubere Probestreifen entnommen. Zur Siegelung werden sie mit den zu versiegelnden Flächen aufeinandergelegt und so gehalten, daß die Probe an jeder Seite mindestens 1 cm übersteht. Die Siegelung muß senkrecht zur Folienlaufrichturig erfolgen. Bei der Siegelfestigkeitsbestimmung wird ein Druck von 50 N/cm$^2$ bei einer Siegelzeit von 0,5 s bei der jeweils vorgewählten Temperatur eingestellt. Aus der so hergestellten Siegelnaht wird aus der Mitte ein exakt 15 mm breiter Prüfstreifen herausgeschnitten. Mit einer Zugfestigkeitsprüfmaschine wird der Prüfstreifen auf die Siegelfestigkeit untersucht, indem er senkrecht zur Laufrichtung mit Prüfgeschwindigkeit von 100 mm/min getrennt wird. Es ist der Maximalwert der beim Zerreißen auftretenden Kraft anzugeben.

Bei der Angabe von der Siegelanspringtemperatur $T_{si}$ und Siegelfestigkeit $SS_p$ wird die von STEHLING/MEKA getroffene Definition übernommen. Als Siegelanspringtemperatur wird die Temperatur verstanden, bei der die Siegelfestigkeit größer 1 N/15mm beträgt. Die Siegelfestigkeit wird aus der graphischen Auftragung aller Siegelfestigkeiten als Funktion der Temperatur analog zu STEHLING/MEKA (siehe Bild 1, S.106) bestimmt.

Die Hot-Tack-Messung dient zur Beurteilung von Siegelnähten, die direkt nach der Fertigung belastet werden. Aus dem zu prüfenden Material wird in Laufrichtung ein ca. 100 mm breiter Probestreifen entnommen. Die Testfeder wird mittig auf die Siegelseite der Probe gelegt. Danach werden Probestreifen und Feder gemeinsam so zusammengebogen, daß die Enden der Feder aneinander liegen, der Probe-streifen sie stramm umspannt und seine beidseitig überstehenden Enden mit der Siegelseite übereinander liegen. Die überstehenden Enden werden zwischen die Siegelwerkzeuge des Siegelgerätes gehalten und unter den oben genannten Bedingungen versiegelt. Es ist zu beachten, daß die Federenden sich gerade berühren, der Probestreifen stramm um die Feder gelegt ist und die Siegelung direkt an den Federenden erfolgt. Sobald die Siegelbacken geschlossen sind, wird die Probe losgelassen. Angegeben wird die Nummer der Feder, der die Naht gerade standhält. Die Feder-Nr. ist ein Maß für die Federkraft wobei die Federkraft mit ansteigender Feder-Nr. größer wird. Es bedeuten bei der Feder mit der geringsten Kraft (Feder-Nr.1) eine Kraft von 0,5 N und bei der Feder mit der größten Kraft (Feder-Nr. 8) eine Kraft von 5 N. In den Tabellen wird die Feder angegeben, bei der sich die Siegelnaht um mehr als 1 mm öffnet.

Als Trübung wird die Lichtmenge in % angegeben, die die Probe nach Durch-leuchten mit einem Zentralstrahl unter einem Raumwinkel >8° bis max. 160° verläßt. Sie wird bezogen auf die insgesamt durchtretende Lichtmenge. Die Messung erfolgt entsprechend der ASTM-Prüfnorm D 1003-61, Procedure A.

**Beispiele und Vergleichsbeispiele**

Alle genannten Polymere sind kommerziell erhältliche Handelsprodukte. Bei Mischungen werden, wenn nicht anders angegeben, die Konzentrationen der einzel- nen Polymere in Gew.-% ausgedrückt.

Tabelle 2:

| Liste der in den Siegelschichten verwendeten Polymere | | | | | |
|---|---|---|---|---|---|
| Polymer | Comonomer | Dichte g/cm$^3$ | Kristallit schmelzpunkt °C | MFR 190°C/2,16kg g/10min | Molekulargewichtsverteilung $M_w/M_n$ |
| MPE-1 | Octen-1 | 0,902 | 100 | 1 | 2 |
| LDPE-1 | - | 0,923 | 111 | 2 | - |
| LLDPE-1 | Octen-1 | 0,920 | 124 | 1,1 | 6,6 |
| LLDPE-2 | Octen-1 | 0,915 | 124 | 1,1 | 6,5 |
| LLDPE-3 | Buten-1 | 0,919 | 117 | 0,7 | 5,5 |
| EAA-1 | Acrylsäure | 0,938 | 99 | 1,5 | - |
| I-1 (Zn-Type) | Methacrylsäure | 0,94 | 94 | 1,8 | 10 |
| EVA-1 | Viylacetat | 0,928 | 96 | 1,9 | - |

Die Dichte der Polymere wird entsprechend ISO 1183 angegeben. Der Schmelz-index MFR wird entsprechend ISO 1133 bei 190°C und einem Auflagegewicht von 2,16 kg in g/10min angegeben. Der Kristallitschmelzpunkt $F_p$ wird aus einer DSC-Messung (Differential-Scanning-Calorimetrie) bestimmt. Die Molekulargewichtsverteilung $M_w/M_n$ wird mittels Gelpermeationschromatographie (GPC) bestimmt.

Alle Siegelschichten sind auf einer Blasfolienanlage hergestellt worden. Die Foliendicke beträgt 50 µm. Die Blasfolien enthalten Gleit- und Antiblockmittel (natürliche Kieselsäure und Ölsäureamid). Die Düsentemperatur beträgt wie die Schmelztemperatur 200°C bis 210°C. Das Aufblasverhältnis beträgt 2 bis 2,3. Die Düsenspaltweite ist 0,7 mm. Die Abzugsgeschwindigkeit liegt zwischen 7 und 10 m/min. Die Blasfolie wird auf einer Kaschiermaschine mit einem 30 µm dicken, ungerecktem PA6-Flachfilm bzw. 15 µm dicken PAXXL-Film verklebt. Mit PAXXL wird eine 15 µm dicke, coextrudierte Folie (Aufbau: PA6/EVOH/PA6) bezeichnet, die in Längsrichtung monoaxial verstreckt ist. Der Einfluß des Klebstoffes kann auf Grund seiner im Vergleich zu den anderen Folienschichten geringen Dicke (kleiner 4 µm) für die hier zugrundeliegenden Betrachtungen vernachlässigt werden.

Alle im Sinne dieser Erfindung aufgeführten Folien werden mit "Beispiel" gekennzeichnet, "Vergleichsbeispiele" spiegeln den Stand der Technik wieder.

| Siegelschicht 50 µm | | | 50 µm Siegelschicht kaschiert mit 30 µm PA 6-Folie | | |
|---|---|---|---|---|---|
| Aufbau | Streck-grenze N/mm$^2$ | $(T_{si})$ °C | $(SS_p)$ N/15mm | Hot-Tack | Trübung % |
| Vergleichsbeispiel 1 LLDPE-1 | 9,5 | 110°C | 47 | 120°C Feder 7 | 15 |
| Vergleichsbeispiel 2 EAA-1 | 6,9 | 90°C | 31 | 110°C Feder 4 | 8 |
| Vergleichsbeispiel 3 I-1 | 13,6 | 90°C | 27 | 120°C Feder 4 | 9,1 |
| Vergleichsbeispiel 4 MPE-1 | 3,1 | 90°C | 38 | 100°C Feder 8 | 5,9 |

Tabelle 3: I. Versuchsreihe

Die I. Versuchsreihe zeigt die nicht zu erwartenden Siegeleigenschaften des MPE im Vergleich zu anderen Polymeren.

| Siegelschicht 50 µm | | | 50 µm Siegelschicht kaschiert mit 15 µm PAXXL | | |
|---|---|---|---|---|---|
| Aufbau | Streck-grenze N/mm$^2$ | $(T_{si})$ °C | $(SS_p)$ N/15mm | Hot-Tack | Trübung % |
| Vergleichsbeispiel 5 LDPE-1 | 9,9 | 110°C | 24 | 110°C Feder 1 | 9,3 |
| Vergleichsbeispiel 6 (60% LDPE-1 + 40% LLDPE-2) | 8,9 | 110°C | 24 | 110°C Feder 1 | 9,2 |
| Vergleichsbeispiel 7 (50% LLDPE-2 + 50% LLDPE-3) | 7,9 | 110°C | 28 | 110°C Feder 1 | 11 |
| Vergleichsbeispiel 8 (60% LDPE-1 + 40% MPE-1) | 7,9 | 100°C | 40 | 110°C Feder 1 | 8,3 |

Tabelle 4: II. Versuchsreihe

Die II. Versuchsreihe zeigt die nicht zu erwartenden guten Siegeleigenschaften der Mischung 60% LDPE-1 mit 40% MPE-1.

| Siegelschicht 50 µm | | 50 µm Siegelschicht kaschiert mit 15 µm PAXXL-Folie | | |
|---|---|---|---|---|
| Aufbau | $T_{si}$ °C | $SS_p$ N/15mm | Hot-Tack bei 130°C | Trübung % |
| Vergleichsbeispiel 19 LDPE-1/EVA-1 30 / 20 µm 110°C/ 96°C $F_p$ | 100 | 22 | Feder 2 | 6,9 |
| Vergleichsbeispiel 10 LDPE-1/LLDPE-3 30 / 20 µm 111°C/ 117°C $F_p$ | 100 | 35 | Feder 1 | 10,7 |
| Beispiel 11 LLDPE-1/MPE-1 30 / 20 µm 124°C/ 100°C $F_p$ | 90 | 46 | Feder 7 | 5,9 |

Tabelle 5: III. Versuchsreihe

Die III. Versuchsreihe zeigt auf; daß durch die erfindungsgemäße mehrschichtige Folie die Siegeleigenschaften nochmals verbessert werden können, wenn die einzelnen Siegelschichten entsprechend der Gleichung 1 angeordnet sind.

Wie beschrieben bietet die erfindungsgemäße Siegelschicht verglichen mit konventionellen Siegelschichten eine deutliche Verbesserung in den Punkten Siegelanspringtemperatur, Siegelfestigkeit und Hot-Tack dar, die auf Grund von Veröffentlichungen nicht zu erwarten war. Die erfindungsgemäße Siegelschicht ist eine sehr vorteilhafte Erweiterung des bestehenden Kaschierfolienprogrammes. So können zum Beispiel auf bestehenden Verpackungsmaschinen die Produkte bei niedrigeren Temperaturen gesiegelt und mit höheren Taktgeschwindigkeiten gefahren werden, ohne Einbußen bei der Qualität der Verpackung zu machen. Alles dies sind Vorteile in ökologischer und ökonomischer Hinsicht. Die erfindungsgemäße Siegelschicht ist nicht beschränkt auf eine bestimmte Verpackungsmaschine, sie kann auf allen Tiefziehmaschinen, Schlauchbeutel oder anderen Maschinen mit Siegeleinrichtung eingesetzt werden. Die erfindungsgemäße Siegelschicht eignet sich für die Verpackung trockener Produkte (z.B. Snack-Artikel, Teigwaren etc.) oder feuchter Produkte (z.B. Fleisch, Käse, Fertiggerichte etc.) oder tiefgefrorener Produkte (z.B. Fertiggerichte) oder pharmazeutischer Produkte.

**Patentansprüche**

1. Mehrschichtige Folie, deren Siegelschicht ein Copolymer aus Ethylen und einem $\alpha$-Olefin (MPE) enthält, das

- mittels eines Metallocen-Katalysators polymerisiert wurde,
- einen Kristallitschmelzpunkt kleiner 110°C,
- einen Schmelzindex MFR von 0,5 bis 10 g/10 min (190 °C/ 2,16kg) und

- eine Molekulargewichtsverteilung $M_w/M_n$ kleiner 3 aufweist,

und deren an die Siegelschicht angrenzende Schicht und ggf. alle weiteren Schichten Polyethylen niedriger Dichte (LDPE), lineares Polyethylen niedriger Dichte (LLDPE) oder deren Mischung enthält bzw. enthalten und der Kristallitschmelzpunkt $F_{pi}$ jeder Schicht der Gleichung

$$F_{pi=1} < F_{pi=2} < ... < F_{pi} < ... < F_{pi=n} \text{ (Schichten i=1 ... n)}$$

genügt, wobei $F_{pi=1}$ der Kristallitschmelzpunkt der Siegelschicht ist.

2. Folie nach Anspruch 1, **dadurch gekennzeichnet, daß** das MPE eine Dichte von kleiner 0,92 g/cm³ und einen Schmelzindex MFR von 0,5 bis 5 g/10 min (190 °C/2,16 kg) aufweist.

3. Folie nach Anspruch 1 oder 2, **dadurch gekennzeichnet, daß** das MPE einen Kristatlitschmelzpunkt kleiner 105 °C und eine Moleknlargewichtsverteilung $M_w/M_n$ kleiner 2,5 aufweist.

4. Folie nach einem der Ansprüche 1-3, **dadurch gekennzeichnet, daß** die Siegelschicht aus 40 bis 99 Gew.-% MPE mit 1 bis 60 Gew.-% LDPE oder LLDPE gemischt wird.

5. Folie nach einem der Ansprüche 1 bis 4, **dadurch gekennzeichnet, daß** die an die Siegelschicht angrenzende Schicht eine Mischung aus MPE und entweder LDPE oder LLDPE enthält.

6. Folie nach einem der Ansprüche 1 bis 5, **dadurch gekennzeichnet, daß** die Siegelschicht übliche Additive, vorzugsweise organische oder anorganische Antiblockmittel, Gleitmittel, Antistatika aufweist.

7. Folie nach einem der Ansprüche 1 bis 6, **dadurch gekennzeichnet, daß** die Folie bedruckt oder mindestens eine Schicht eingefärbt ist.

8. Folie nach einem der Ansprüche 1 bis 7, **dadurch gekennzeichnet, daß** die der Siegelschicht abgewandte Folienaußenseite einer physikalischen Oberflächenbehandlung, vorzugsweise einer Corona-Vorbehandlung oder Plasma-Vorbehandlung unterzogen worden ist.

9. Folie nach einem der Ansprüche 1 bis 8, **dadurch gekennzeichnet, daß** die Folie ein Substrat, vorzugsweise aus Papier, Aluminium, Zellglas, Polypropylen, Polyalkylenterephthalat, Polyamid, Polycarbonat, Polyvinylalkohol, Polystyrol, metallisierten Film oder eine Kombination aus den genannten Substraten, wobei die Thermoplaste gereckt oder ungereckt sein können, enthält.

10. Verwendung einer Folie nach einem der Ansprüche 1 bis 9 zur Verpackung von medizinischen Geräten oder anderen Produkten, die eine Wasserdampfbarriere oder Schutz vor mikrobieller Kontamination benötigen.

11. Verwendung einer Folie nach Anspruch 9 zur Verpackung von trockenen Produkten, vorzugsweise Snack-Artikeln, Teigwaren, oder feuchten Produkten, vorzugsweise Käse, Fleisch, Fertiggerichten, oder tiefgefrorenen Produkten, vorzugsweise Fertiggerichten, oder pharmazeutischen Produkten.

**Claims**

1. Multilayer film, whose scalable layer comprises a copolymer of ethylene and an α-olefin (MPE), which

   - has been polymerized by means of a metallocene catalyst,
   - has a crystallite melting point smaller than 110°C,
   - has an MFR melt index of from 0.5 to 10 g/10 min (190°C/2.16 kg)
     and
   - has a polydispersity $M_w/M_n$ smaller than 3, where

   that layer of the film adjacent to the sealable layer comprises low-density polyethylene (LDPE), linear low-density polyethylene (LLDPE), or a mixture of these, as also do any other layers, and

the crystallite melting point $F_{pi}$ of each layer complies with the equation

$$F_{pi = 1} < F_{pi = 2} ... < F_{pi} < ... < F_{pi = n} \text{ (layers i = 1 ... n),}$$

where $F_{pi = 1}$ is the crystallite melting point of the sealable layer.

2.  Film according to Claim 1, **characterized in that** the MPE has a density smaller than 0,92 g/cm$^3$ and an MFR melt index of from 0.5 to 5 g/10 min (190°C/2.16 kg).

3.  Film according to Claim 1 or 2, **characterized in that** the MPE has a crystallite melting point smaller than 105°C and a polydispersity $M_w/M_n$ smaller than 2.5.

4.  Film according to any of Claims 1-3, **characterized in that** the sealable layer is a mixture prepared from 40-99% by weight of MPE with from 1 to 60% by weight of LDPE or LLDPE.

5.  Film according to any of Claims 1 to 4, **characterized in that** the layer adjacent to the sealable layer comprises a mixture of MPE and either LDPE or LLDPE.

6.  Film according to any of Claims 1 to 5, **characterized in that** the scalable layer has conventional additives, preferably organic or inorganic antiblocking agents, lubricants, antistatic agents.

7.  Film according to any of Claims 1 to 6, **characterized in that** the film has been printed or at least one layer has been coloured.

8.  Film according to any of Claims 1 to 7, **characterized in that** that outer side of the film facing away from the sealable layer has been subjected to a physical surface treatment, preferably the corona pre-treatment or plasma pre-treatment.

9.  Film according to any of Claims 1 to 8, **characterized in that** the film comprises a substrate, preferably of paper, aluminium, cellophane, polypropylene, polylalkylene terephthalate, polyamide, polycarbonate, polyvinyl alcohol, polystyrene, metallized film or a combination of the substrates mentioned, and the thermoplastics here may be stretched or unstretched.

10. Use of a film according to any of Claims 1 to 9 for the packaging of medical equipment or of other products which require a water vapour barrier or require protection from microbial contamination.

11. Use of a film according to Claim 9 for the packaging of dry products, preferably snack articles, pastry products, or of moist products, preferably cheese, meat, ready-cooked food, or of frozen products, preferably of ready-cooked food, or of pharmaceutical products.


**Revendications**

1.  Film multicouche, dont la couche de soudage contient un copolymère d'éthylène et d'une $\alpha$-oléfine (MPE), qui

    - a été polymérisé au moyen d'un catalyseur métallocène,
    - présente un point de fusion de cristallite inférieur à 110°C,
    - un indice de fluidité à chaud IFC de 0,5 à 10 g/10 min (190°C/2,16 kg) et
    - une distribution de masses moléculaires $M_w/M_n$ inférieure à 3,

    et dont la couche adjacente à la couche de soudage et éventuellement toutes les autres couches contient ou contiennent du polyéthylène basse densité (LDPE), du polyéthylène linéaire basse densité (LLDPE) ou un mélange de ceux-ci et
    le point de fusion de cristallite $F_{pi}$ de chaque couche satisfait à l'équation

$$F_{pi=1} < F_{pi=2} < ... < F_{pi} < ... < F_{pi=n} \text{ (couches } i=1...n)$$

$F_{pi=1}$ étant le point de fusion de cristallite de la couche de soudage.

2. Film selon la revendication 1, **caractérisé en ce que** le MPE a une densité inférieure à 0,92 g/cm$^3$ et un indice de fluidité à chaud IFC de 0,5 à .5 g/10 min (190°C/2,16 kg).

3. Film selon la revendication 1 ou 2, **caractérisé en ce que** le MPE présente un point de fusion de cristallite inférieur à 105°C et une distribution de masses moléculaires $M_w/M_n$ inférieure à 2,5.

4. Film selon l'une quelconque des revendications 1 à 3, **caractérisé en ce que** la couche de soudage est constituée de 40 à 99 % en poids de MPE mélangés avec de 1 à 60 % en poids de LDPE ou LLDPE.

5. Film selon l'une quelconque des revendications 1 à 4, **caractérisé en ce que** la couche adjacente à la couche de soudage contient un mélange de MPE et de soit LDPE, soit LLDPE.

6. Film selon l'une quelconque des revendications 1 à 5, **caractérisé en ce que** la couche de soudage comporte des additifs usuels, de préférence des agents anti-adhérence de contact, des agents de glissement, des agents antistatiques, organiques ou minéraux.

7. Film selon l'une quelconque des revendications 1 à 6, **caractérisé en ce que** le film est imprimé ou au moins une couche est encrée.

8. Film selon l'une quelconque des revendications 1 à 7, **caractérisé en ce que** la face externe du film opposée à la couche de soudage a été soumise à un traitement physique de surface, de préférence un prétraitement par effet couronne ou un prétraitement par plasma.

9. Film selon l'une quelconque des revendications 1 à 8, **caractérisé en ce que** le film comporte un support, de préférence en papier, aluminium, Cellophane, polypropylène, poly(alkylène-téréphtalate), polyamide, polycarbonate, poly(alcool vinylique), polystyrène, pellicule métallisée ou une association des supports cités, les matières thermoplastiques pouvant être étirées ou non étirées.

10. Utilisation d'un film selon l'une quelconque des revendications 1 à 9 pour l'emballage d'appareils médicaux ou d'autres produits qui requièrent une barrière à la vapeur d'eau ou une protection contre la contamination microbienne.

11. Utilisation d'un film selon la revendication 9, pour l'emballage de produits secs, de préférence de petits produits alimentaires, de pâtes, ou de produits frais, de préférence de fromage, de viande, de plats cuisinés, ou de produits surgelés, de préférence des plats cuisinés, ou de produits pharmaceutiques.